# EUROPÄISCHE PATENTANMELDUNG

(11) **EP 4 242 133 A1**
(43) Veröffentlichungstag der Anmeldung: **13.09.2023**
(21) Anmeldenummer: 23156602.7
(22) Anmeldetag: 14.02.2023
(51) Int. Cl.: B65D 85/50

(54) **BLUMENSTRAUSS-VERKAUFSARRANGEMENT UND VERPACKUNGSEINHEIT FÜR EINEN BLUMENSTRAUSS**

(30) Priorität: 09.03.2022 DE 202022101286 U
(71) Anmelder: James, Steven R. W., 23869 Elmenhorst (DE)
(72) Erfinder: James, Steven R. W., 23869 Elmenhorst (DE)
(74) Vertreter: Uexküll & Stolberg

(57) **Zusammenfassung**

Die Erfindung betrifft ein Blumenstrauß-Verkaufsarrangement mit einem Blumenstrauß (2) und einer Verpackungseinheit (4), wobei die Verpackungseinheit einen standfähigen Becher (6) mit einem Deckel (8) aufweist, dessen die obere Becheröffnung verschließende Deckelwand aus verformbarem, aber elastischem oder formstabilem Material im Zentrum mit einer durch eine Mehrzahl von sich im Zentrum schneidenden Einschnittlinien (10) gebildeten Aufnahmeöffnung (14) versehen ist, wobei ein in die Aufnahmeöffnung eingeführter unterer Stielbereich des Blumenstraußes durch Deckelwandbereiche (12) zwischen benachbarten Einschnittlinien (10), die durch den eingeführten unteren Stielbereich in das Behälterinnere verformt sind, zentriert in der Aufnahmeöffnung gehalten ist.

## Beschreibung

Die vorliegende Erfindung betrifft einen Blumenstrauß-Verkaufsarrangement und eine Verpackungseinheit für einen Blumenstrauß.

Erzeuger von Schnittblumen züchten meist Blumen meist in großem Stil, z.B. Tulpen, die in großer Zahl in den Niederlanden aufgezogen werden. Die eingebrachten Schnittblumen werden dann vom Erzeuger direkt an Einzelhändler geliefert oder in großen Gebinden von Blumensträußen an Supermarktketten geliefert. Die einzelnen Blumensträuße werden dann, meist in einer Cellophaneinhüllung, einzeln oder zu mehreren in ein eimerartiges, offenes Gefäß gestellt, das mit Wasser gefüllt ist, und diese Gefäße werden dicht an dicht in eine außen umrandete Papppalette eingestellt. Diese Art und Weise, Blumensträuße zu den Verkäufern zu transportieren und dort zu präsentieren, hat verschiedene Nachteile. Beim Transport, der üblicherweise per LKW erfolgt, kann es bei scharfen Bremsungen oder anderweitigen verkehrsbedingten Beschleunigungen dazu kommen, dass das Wasser aus den oben offenen Behältern überschwappt und dadurch die umgebende Palette aus Pappe durchweicht, was die weitere Handhabung der Palette bei der Ablieferung erschwert oder unmöglich macht. Ein weiterer Nachteil von so angelieferten, in Cellophanhüllen eingehüllten Blumensträußen besteht darin, dass diese in Regalen in Verkaufsräumen nicht einfach in ästhetisch ansprechenderweise präsentiert werden können.

Es ist daher Aufgabe der vorliegenden Erfindung ein Blumenstrauß-Verkaufsarrangement zu schaffen, das vom Hersteller sicher zum Weiterverkäufer transportiert werden kann und das eine ästhetisch ansprechende Präsentation als Blumenstrauß-Verkaufsarrangement in Verkaufsregalen oder auf Verkaufstischen ermöglicht. Weiterhin soll eine Verpackungseinheit für einen Blumenstrauß geschaffen werden, mit der ein Blumenstrauß-Verkaufsarrangement herstellbar ist.

Zur Lösung dieser Aufgabe dienen das Blumenstrauß-Verkaufsarrangement mit den Merkmalen von Anspruch 1 und die Verpackungseinheit für einen Blumenstrauß mit den Merkmalen des Anspruchs 6, wobei vorteilhafte Ausführungsformen der Erfindung in den Unteransprüchen angegeben sind.

Erfindungsgemäß weist ein Blumenstrauß-Verkaufsarrangement einen Blumenstrauß und eine Verpackungseinheit auf, die einen standfähigen Becher mit einem Deckel umfasst. Die die obere Becheröffnung verschließende Deckelwand besteht aus verformbarem, aber elastischem oder formstabilem Material, was bedeutet, dass das Material eine einmal vorgenommene Verformung beibehält oder tendenziell elastisch wieder in die ursprüngliche Form zurückkehrt. Als dafür geeignetes Material kann zum Beispiel Pappe dienen, insbesondere ein 300 g/m² Kraftpapier. Die Deckelwand ist im Zentrum mit einer durch eine Mehrzahl von sich im Zentrum schneidenden Einschnittlinien gebildeten Aufnahmeöffnung versehen. Ein in die Aufnahmeöffnung eingeführter unterer Stielbereich des Blumenstraußes wird durch Deckelwandbereiche zwischen benachbarten Einschnittlinien, die durch den eingeführten unteren Stielbereich in das Behälterinnere verformt sind, zentriert in der Aufnahmeöffnung gehalten. Dadurch ist eine stabile Stellung des Blumenstraußes in dem aufgestellten Becher gewährleistet. Weiterhin bleibt die Aufnahmeöffnung durch die beim Einführen des unteren Stielbereichs des Blumenstraußes in die Aufnahmeöffnung ins Behälterinnere durchgebogenen Deckelwandbereiche zwischen den Schnittlinien, die in Anlage an den Stielbereich des Blumenstraußes bleiben, weitgehend geschlossen. Dadurch wird erreicht, dass auch bei stärkeren Transportbewegungen wie beim Abbremsen eines LKW eine im unteren Bereich des Bechers vorhandene Wassermenge ganz überwiegend im Inneren des Bechers verbleibt, so dass ein nennenswertes Austreten von Wasser aus dem Becher des Verkaufsarrangements unter normalen Handhabungsbedingungen ausgeschlossen ist.

Weiterhin können die Blumenstrauß-Verkaufsarrangements in Supermärkten in großer Zahl in Verkaufsregalen oder auf anderen Flächen wie etwa Verkaufstischen aufgestellt und so vorteilhaft präsentiert werden.

In einer bevorzugten Ausführungsform wird die Aufnahmeöffnung durch drei, vier bzw. fünf sich schneidenden Einschnittlinien gebildet, wobei zwischen benachbarten Einschnittlinien jeweils ein Winkel von 60°, 45° bzw. 36° gebildet ist.

In einer bevorzugten Ausführungsform sind der Becher und der Deckel der Verpackungseinheit aus Pappe gebildet, wobei zumindest die Behälterinnenwand eine Beschichtung aufweist, die eine Wasserdichtigkeit des Bechers unterstützt.

In einer bevorzugten Ausführungsform sind der Becher und der Deckel aus Bambuspapier gebildet. Dies hat den Vorteil, dass die Verpackungseinheit kompostierbar ist.

In einer weiteren bevorzugten Ausführungsform weist die Beschichtung der Innenwände des Bechers Polyethylen, Polyactide (PLA) oder wasserbasierte Dispersionsbarrieren auf. Polyactide, kurz auch Polymilchsäuren oder abgekürzt PLA vom englischen Begriff Polyactid Acid genannt, sind durch Wärmezufuhr verformbare Kunststoffe (Thermoplaste), die aus vielen, chemisch gebundenen Milchsäuremolekülen aufgebaut sind. Die weiter genannten Beschichtungen mit einer wasserbasierten Dispersionsbarriere und die Beschichtungen mit PLA sind vorteilhaft, da sie biologisch abbaubar sind.

Weiterhin wird eine Verpackungseinheit für einen Blumenstrauße bereitgestellt, die einen standfähigen Becher mit einem Deckel aufweist. Die die obere Becheröffnung verschließende Deckelwand besteht aus verformbarem, aber elastischem oder formstabilem Material und ist im Zentrum mit einer Aufnahmeöffnung versehen, die durch eine Mehrzahl von sich im Zentrum schneidenden Einschnittlinien gebildet ist. Auf diese Weise ist ein unterer Stielbereich eines Blumenstraußes in die Aufnahmeöffnung einführbar und ist dann durch in das Behälterinnere verformte Deckelwandbereiche zwischen benachbarten Einschnittlinien, die am Stielbereich in Anlage bleiben, zentriert in der Aufnahmeöffnung haltbar.

Die Erfindung wird im Folgenden anhand eines Ausführungsbeispiels mit Bezug auf die Zeichnungen beschrieben, in denen:
Fig. 1 eine Draufsicht von oben und eine seitliche Draufsicht auf einen Becher einer Verpackungseinheit für einen Blumenstrauß zeigt,
Fig. 2 eine perspektivische Ansicht des Bechers der Verpackungseinheit für einen Blumenstrauß aus Fig. 1 zeigt;
Fig. 3 eine perspektivische Ansicht des Bechers der Verpackungseinheit aus Fig. 1 und 2 mit entferntem Deckel zeigt,
Fig. 4 eine perspektivische Ansicht eines Blumenstrauß-Verkaufsarrangements zeigt, bei der ein Blumenstrauß in die Verpackungseinheit eingeführt ist, und
Fig. 5 eine Schnittdarstellung des in Fig. 4 gezeigten Blumenstrauß-Verkaufsarrangements zeigt.

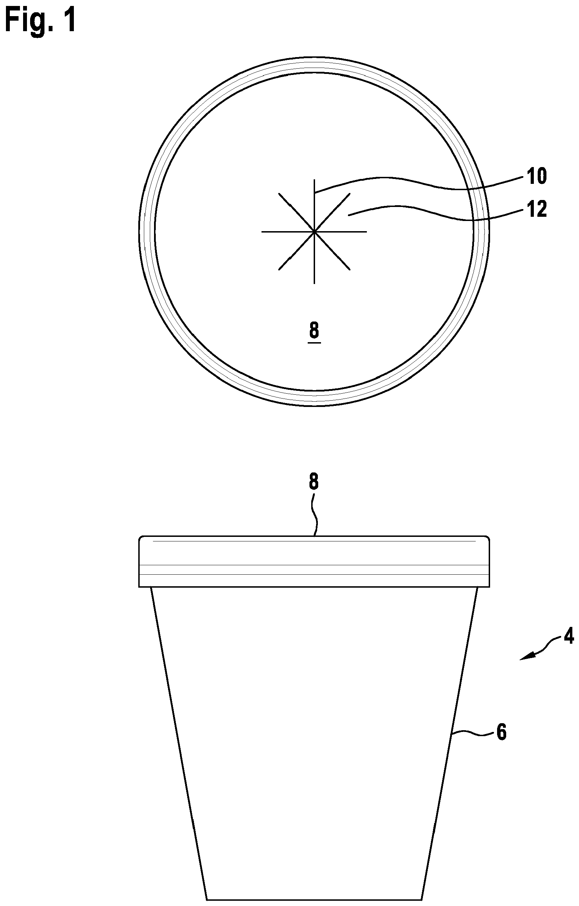

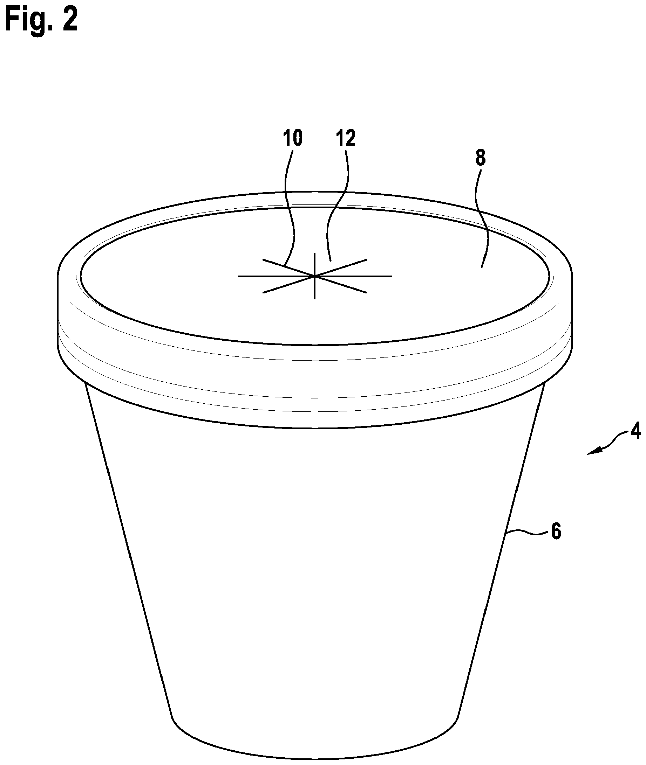

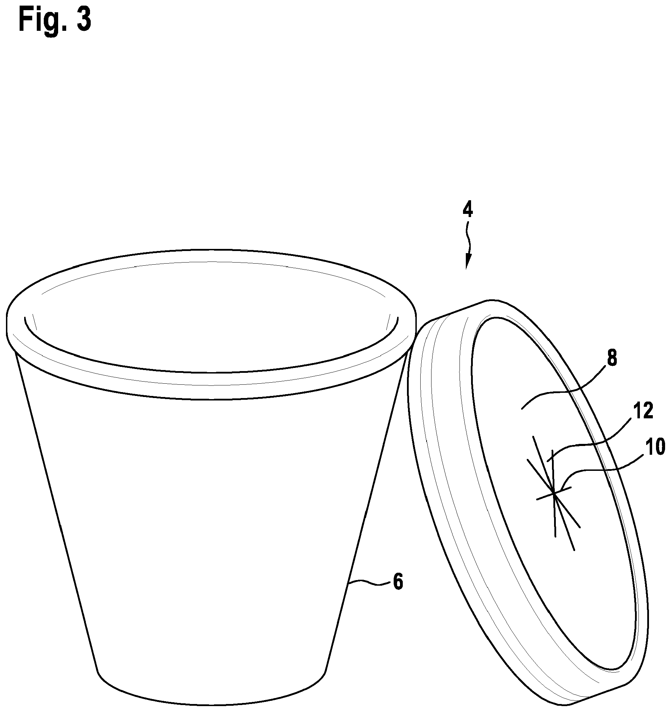

Im Folgenden wird zunächst auf die Figuren 1 bis 3 Bezug genommen, in denen eine Ausführungsform für eine Verpackungseinheit für einen Blumenstrauß gezeigt ist. Die Verpackungseinheit 4 umfasst einen Becher 6 und einen Deckel 8, die vorzugsweise aus festem Bambuspapier hergestellt sind. Die Innenwand des Bechers 6 ist vorzugsweise mit einer wasserdichten Beschichtung besehen, die Polyactide (PAL) oder wasserbasierte Dispersionsbarrieren aufweist und die insofern biologisch abbaubar ist.

Der Deckel 8 ist im Zentrum mit einer Aufnahmeöffnung versehen, die durch mehrere, in diesem Fall vier sich im Zentrum schneidende Einschnittlinien 10 gebildet ist. Die Einschnittlinien 10 reichen vollständig durch die Deckelwand. Zwischen benachbarten Einschnittlinien 10 ist jeweils ein tortenstückförmiger Deckelwandbereich 12 gebildet. Auf diese Weise ist es möglich, einen Gegenstand, wie zum Beispiel den unteren Stielbereich eines Blumenstraußes zentral auf die Aufnahmeöffnung des Deckels zu drücken, wodurch die durch die Einschnittlinien 10 gebildeten Deckelwandbereiche 12 sich in das Behälterinnere durchbiegen und daher die Einführbarkeit des Stielbereichs des Blumenstraußes ermöglichen.

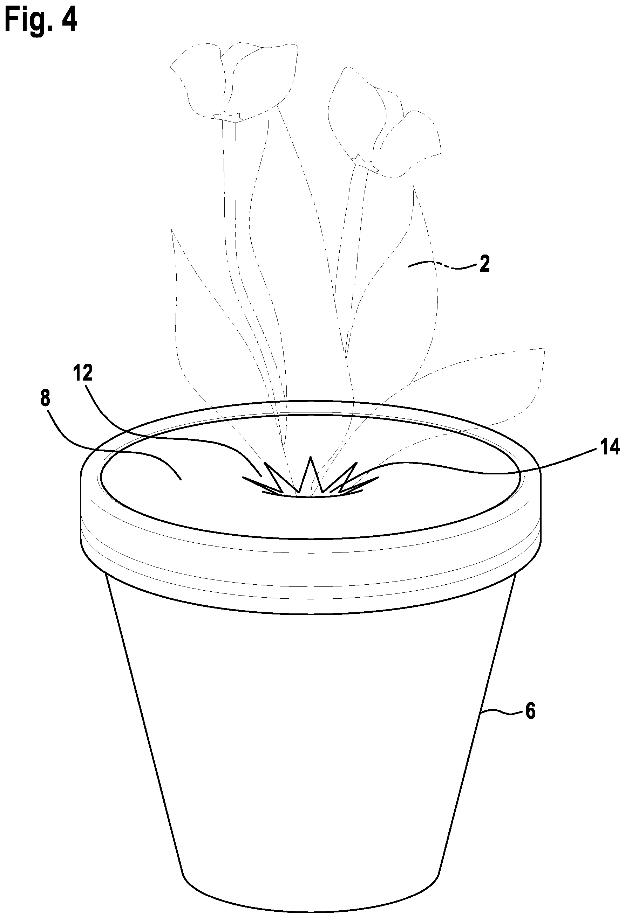

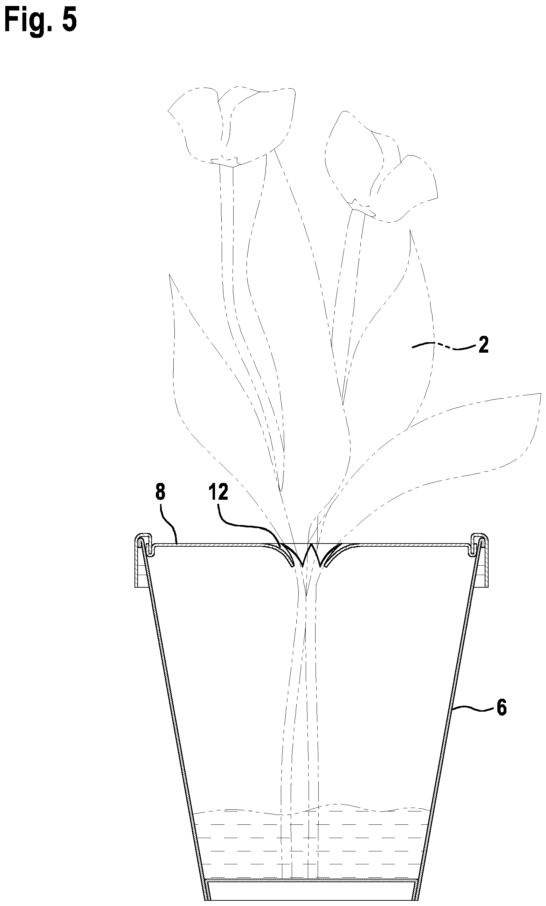

In den Figuren 4 und 5 ist ein Blumenstrauß-Verkaufsarrangement gezeigt, bei dem ein Blumenstrauß 2 in eine Verpackungseinheit 4, wie sie in den Figuren 1 bis 3 gezeigt ist, eingesteckt ist. Wie in Fig. 4 zu erkennen ist, sind die zwischen benachbarten Einschnittlinien liegenden Deckelwandbereiche 12 durch den eingeschobenen Stielbereich des Blumenstraußes nach unten, in das Behälterinnere durchgebogen, wobei diese Verformung elastisch oder zumindest formstabil ist und nicht über die für das Einführen des Stielbereichs des Blumenstraußes notwendige Verformung hinausgeht, so dass die dem Stielbereich zugewandten Deckelwandbereiche 12 in Anlage an dem Stielbereich des Blumenstraußes 2 bleiben. Dies ist auch in der Schnittdarstellung in Fig. 5 zu erkennen, in der die Deckelwandbereiche 12 nur so stark durchgebogen sind, dass sie die Einführung des Stielbereichs des Blumenstraußes 2 ermöglichen, der Stielbereich des Blumenstraußes aber von den anliegenden durchgebogenen Deckelwandbereichen 12 zentriert in der Aufnahmeöffnung im Deckel gehalten bleibt. Gleichzeitig bleibt dadurch die Aufnahmeöffnung 14 weitgehend verschlossen, da nur kleine Lücken zwischen benachbarten durchgebogenen Deckelwandbereichen 12 offen bleiben. Auf diese Weise kann auch bei stärkeren Bewegungen des Blumenstrauß-Verkaufsarrangements beim Transport kaum Wasser aus dem Becher 6 austreten.

## Patentansprüche

1. Blumenstrauß-Verkaufsarrangement mit einem Blumenstrauß (2) und einer Verpackungseinheit (4), wobei die Verpackungseinheit einen standfähigen Becher (6) mit einem Deckel (8) aufweist, dessen die obere Becheröffnung verschließende Deckelwand aus verformbarem, aber elastischem oder formstabilem Material im Zentrum mit einer durch eine Mehrzahl von sich im Zentrum schneidenden Einschnittlinien (10) gebildeten Aufnahmeöffnung (14) versehen ist, wobei ein in die Aufnahmeöffnung eingeführter unterer Stielbereich des Blumenstraußes durch Deckelwandbereiche (12) zwischen benachbarten Einschnittlinien (10), die durch den eingeführten unteren Stielbereich in das Behälterinnere verformt sind, zentriert in der Aufnahmeöffnung gehalten ist.

2. Blumenstrauß-Verkaufsarrangement nach Anspruch 1, wobei die Aufnahmeöffnung durch drei sich schneidende Einschnittlinien gebildet ist, wobei zwischen benachbarten Einschnittlinien jeweils ein Winkel von 60° gebildet ist, durch vier sich schneidende Einschnittlinien (10) gebildet ist, wobei zwischen benachbarten Einschnittlinien (10) jeweils ein Winkel von 45° gebildet ist, oder durch fünf sich schneidende Einschnittlinien gebildet ist, wobei zwischen benachbarten Einschnittlinien jeweils ein Winkel von 36° gebildet ist.

3. Blumenstrauß-Verkaufsarrangement nach einem der vorhergehenden Ansprüche, wobei der Becher (6) und der Deckel (8) aus Pappe gebildet sind, wobei zumindest die Behälterinnenwand eine Beschichtung aufweist, die eine Wasserdichtigkeit des Bechers (6) unterstützt.

4. Blumenstrauß-Verkaufsarrangement nach Anspruch 3, wobei der Becher (6) und der Deckel (8) aus Bambuspapier gebildet sind.

5. Blumenstrauß-Verkaufsarrangement nach Anspruch 3 oder 4, wobei die Beschichtung der Innenwände des Bechers (8) Polyethylen, Polyactide (PLA) oder wasserbasierte Dispersionsbarrieren aufweist.

6. Verpackungseinheit für einen Blumenstrauß, wobei die Verpackungseinheit einen standfähigen Becher (6) mit einem Deckel (8) aufweist, dessen die obere Becheröffnung verschließende Deckelwand aus verformbarem, aber elastischen oder formstabilen Material im Zentrum mit einer Aufnahmeöffnung (14) die durch eine Mehrzahl von sich im Zentrum schneidenden Einschnittlinien (10) gebildet ist, wobei ein unterer Stielbereich eines Blumenstraußes in die Aufnahmeöffnung einführbar ist und durch in das Behälterinnere verformte Deckelwandbereiche (12) zwischen benachbarten Einschnittlinien zentriert in der Aufnahmeöffnung (14) haltbar ist.

7. Verpackungseinheit nach Anspruch 6, wobei die Aufnahmeöffnung durch drei sich schneidende Einschnittlinien gebildet ist, wobei zwischen benachbarten Einschnittlinien jeweils ein Winkel von 60° gebildet ist, durch vier sich schneidende Einschnittlinien (10) gebildet ist, wobei zwischen benachbarten Einschnittlinien (10) jeweils ein Winkel von 45° gebildet ist, oder durch fünf sich schneidende Einschnittlinien gebildet ist, wobei zwischen benachbarten Einschnittlinien jeweils ein Winkel von 36° gebildet ist.

8. Verpackungseinheit nach einem der Ansprüche 6 oder 7, wobei der Becher (6) und der Deckel aus Pappe (8) gebildet sind, wobei zumindest die Behälterinnenwand eine Beschichtung aufweist, die eine Wasserdichtigkeit des Bechers unterstützt.

9. Verpackungseinheit nach Anspruch 8, wobei der Becher (6) und der Deckel (8) aus Bambuspapier gebildet sind.

10. Blumenstrauß-Verkaufsarrangement nach einem der Ansprpüche 8 oder 9, wobei die Beschichtung der Innenwände des Bechers (6) Polyethylen, Polyactide (PLA) oder wasserbasierte Dispersionsbarrieren aufweist.
